# EUROPÄISCHE PATENTANMELDUNG

(11) **EP 1 496 479 A1**
(43) Veröffentlichungstag der Anmeldung: **12.01.2005**
(21) Anmeldenummer: 03014589.0
(22) Anmeldetag: 08.07.2003
(51) Int. Cl.: G07D 7/12, G07D 7/00, G06K 9/20, G01J 4/00

(54) **Lesegerät zur automatischen Prüfung der Echtheit von Dokumenten**

(71) Anmelder: Identification Systems DERMALOG GmbH, 20148 Hamburg (DE)
(72) Erfinder: Mull, Günther, 22085 Hamburg (DE)
(74) Vertreter: UEXKÜLL & STOLBERG

(57) **Zusammenfassung**

Die Erfindung betrifft ein Lesegerät zur automatischen Prüfung der Echtheit von Dokumenten, wobei das Lesegerät aufweist: Eine Mehrzahl von Beleuchtungseinrichtungen (10,4,6) zum im Wesentlichen ganzflächigen Beleuchten einer auf einer Dokumentenauflagefläche (2) aufliegenden Seite des Dokuments aufeinanderfolgend mit sichtbarem Licht, ultraviolettem Licht und Infrarotstrahlung, eine Kamera (20) zur jeweiligen Aufnahme der beleuchteten Seite und einer Steuer- und Auswerteeinrichtung zur Steuerung der Beleuchtungseinrichtungen und zur Auswertung der unter den verschiedenen Beleuchtungen von der Kamera aufgenommenen Bilder. Gemäß der Erfindung ist vorgesehen, dass die Beleuchtungseinrichtung (10,12,14,16,18) für sichtbares Licht so ausgestaltet ist, dass die Seite des Dokuments mit im Wesentlichen paralleler Strahlung aufeinanderfolgend unter wenigstens zwei Einfallswinkeln zur Seitenoberfläche des Dokuments beleuchtbar ist, und dass die Steuer- und Auswerteeinrichtung so vorbereitet ist, die unter den wenigstens zwei Einfallswinkeln erzeugten Bilder auf vorgegebene Kriterien hin zu vergleichen, um dadurch Sicherheitskennzeichen, die unter unterschiedlichen Beleuchtungs- oder Betrachtungswinkeln unterschiedliche Erscheinungbilder bieten, erkennen zu können.

## Beschreibung

Die vorliegende Erfindung betrifft ein Lesegerät zur automatischen Prüfung der Echtheit von Dokumenten.

Bei solchen Dokumenten kann es sich um Reisepässe, Personalausweise, Führerscheine und Geldscheine oder andere Dokumente handeln, die automatisch auf ihre Echtheit hin zu untersuchen sind, z.B. an Grenzkontrollstellen, Flughäfen, in Banken etc.

Ein Lesegerät nach dem oberbegriff von Anspruch 1 ist aus WO 00/04516 bekannt. Das Lesegerät hat eine Dokumentenauflagefläche, auf die das Dokument, z.B. der Reispass, aufgeschlagen aufgelegt wird. Das Gerät hat eine Mehrzahl von Beleuchtungseinrichtungen, um die auf der Dokumentenauflagefläche aufliegende Seite des Dokuments aufeinanderfolgend mit sichtbarem Licht, ultraviolettem Licht und Infrarotstrahlung zu beleuchten. Ferner ist eine Kamera zur Aufnahme der Seite unter den verschiedenen Beleuchtungen vorgesehen. Die Kamera ist mit einer Steuer- und Auswerteeinrichtung verbunden, die zur Auswertung der unter den verschiedenen Beleuchtungen von der Kamera aufgenommenen Bilder und zur Steuerung der Beleuchtungseinrichtungen vorbereitet ist. Bei dem bekannten Lesegerät erfolgt die Beleuchtung im sichtbaren Bereich mit im Wesentlichen parallelem Licht und "koaxial" zur optischen Achse der Kamera, die senkrecht zu der aufzunehmenden Seite steht, d.h. die einfallenden Lichtstrahlen verlaufen parallel zu den reflektierten, die auf die Kamera fokussiert werden. Es sind auch Lesegräte bekannt, bei denen die Beleuchtung im sichtbarem Bereich mit diffusem Licht erfolgt, d.h. es ist eine einfache Lichtquelle ohne optische Elemente wie etwa Parabolspiegel vorhanden.

Obwohl mit dem bekannten Lesegeräten eine Reihe von Echtheitsprüfungen unter den verschiedenen Beleuchtungen vorgenommen werden können, besteht der Bedarf, die Sicherheit von Lesegeräten bei der automatischen Erkennung der Echtheit und Unverfälschtheit von Dokumenten weiter zu erhöhen.

Es ist daher Aufgabe der vorliegenden Erfindung, ein Lesegerät zur automatischen Prüfung der Echtheit von Dokumenten anzugeben, mit dem die Erkennung weiterer Sicherheitsmerkmale und damit eine sicherere Prüfung der Echtheit von Dokumenten möglich ist.

Zur Lösung dieser Aufgabe ist vorgesehen, dass die Beleuchtungseinrichtung für sichtbares Licht so ausgestaltet ist, dass die Seite des Dokuments mit im Wesentlichen paralleler Strahlung aufeinanderfolgend unter wenigstens zwei Einfallswinkeln zur Seitenoberfläche des Dokuments beleuchtbar ist, und dass die Steuer- und Auswerteeinrichtung so vorbereitet ist, die unter den wenigstens zwei Einfallswinkeln erzeugten Bilder auf vorgegebene Kriterien hin zu vergleichen, um dadurch Sicherheitskennzeichen, die unter unterschiedlichen Beleuchtungs- oder Betrachtungswinkeln unterschiedliche Erscheinungbilder bieten, erkennen zu können.

Mit dem vorliegenden Lesegerät ist es möglich, Sicherheitskennzeichen, die bei visueller Betrachtung mit dem Auge unter unterschiedlichen Blickwinkeln unterschiedliche Erscheinungsbilder bieten, mit Mitteln der Bildverarbeitung in der Steuer- und Auswerteeinrichtung automatisch zu prüfen. Solche Sicherheitsmerkmale sind z.B. Hologramme, Kinegramme und Aufdrucke mit optisch variabler Tinte (optical variable ink). Es hat sich nämlich herausgestellt, dass bei Beleuchtung mit im Wesentlichen parallelem Licht aus einem ersten und wenigstens einem zweiten Beleuchtungswinkel durch Vergleichen der von der feststehenden Kamera aufgenommenen Bilder, derartige Sicherheitsmerkmale mit Mitteln der digitalen Bildverarbeitung durch Vergleich der Bilder der beiden Sicherheitsmerkmale unter verschiedenen Beleuchtungswinkeln verlässlich erkennbar sind. Eine Steigerung der Erkennungssicherheit lässt sich natürlich erreichen, indem nicht nur zwei, sondern drei oder mehr unterschiedliche Beleuchtungswinkel vorgesehen werden.

In einer bevorzugten Ausführungsform weist die Beleuchtungseinrichtung für sichtbares Licht eine erste Lichtquelle zum Richten im Wesentlichen paralleler Strahlung unter einem ersten Einfallswinkel und eine zweite Lichtquelle zum Richten im Wesentlichen paralleler Strahlung unter einem zweiten Einfallswinkel zur Seitenoberfläche des Dokuments auf. Auf diese Weise ist es möglich, Aufnahmen mit parallelem Licht unter zwei Beleuchtungswinkeln zu machen, ohne dabei irgendwelche beweglichen Teile zu benötigen.

In einer weiter bevorzugten Ausführungsform ist angrenzend an die mit einer Glasplatte versehenen Auflagefläche für die zu untersuchende Seite des Dokuments eine abgewinkelte weitere Auflagefläche vorgesehen, in die eine Ausleseeinrichtung zur kontaktlosen Auslese eines Transponders eingebaut ist, die mit der Steuer- und Auswerteeinheit verbunden ist. Diese Ausführungsform ist für Anwendungen gedacht, bei denen das zu untersuchende Dokument, z.B. der Reisepass, einen Chip mit Transponder enthält, wobei in dem Chip biometrische Daten und weitere Daten des Reisepassinhabers gespeichert sein können. Wenn der Reisepass aufgeklappt, mit der optisch zu untersuchenden Seite aufgelegt auf die Auflagefläche auf das Lesegerät aufgelegt ist, liegt der weggeklappte weitere Teil des Reisepasses auf der weiteren Auflagefläche, so dass der Speicherchip mit dem Transponder von der Ausleseeinrichtung ausgelesen werden kann und die Daten an die Steuer- und Auswerteeinrichtung des Lesegerätes weitergeleitet werden können.

Die Erfindung wird im Folgenden anhand eines Ausführungsbeispiels in den Zeichnungen erläutert, in denen:
Figur 1 eine schematische seitliche Schnittansicht des Lesegerätes zeigt; und
Figur 2 eine schematische Seitenansicht des Lesegerätes zeigt.

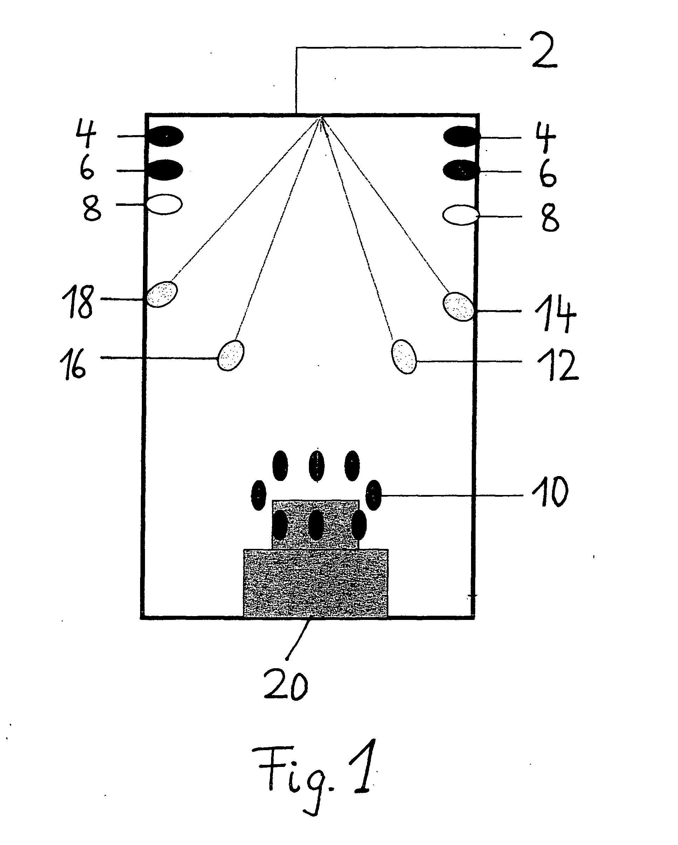

Figur 1 zeigt eine schematische seitliche Schnittansicht des Lesegerätes. Oben an dem Lesegerät befindet sich eine mit einer Glasplatte versehene Auflagefläche 2 für das zu prüfende Dokument. Im Folgenden wird zur Vereinfachung der Beschreibung auf einen Reisepass als zu prüfendes Dokument Bezug genommen.

Im Inneren des Lesegerätes befindet sich eine Mehrzahl von Beleuchtungseinrichtungen, nämlich eine Beleuchtungseinrichtung 4 für ultraviolettes Licht, eine Beleuchtungseinrichtung 6 für Infrarotlicht, und eine Beleuchtungseinrichtung 8 für einen anderen gewünschten Wellenlängenbereich, die hier nur schematisch angedeutet sind.

Sichtbares, im Wesentlichen weißes Licht kann parallel, unter verschiedenen Beleuchtungswinkeln aufeinanderfolgend auf die auf der Auflagefläche 2 aufliegende Seite des Reisepasses geworfen werden. Dazu ist zunächst eine Beleuchtungseinrichtung 10 für sichtbares Licht vorgesehen, die hier nur durch eine kreisförmige Anordnung von Linsen schematisch angedeutet ist und die im Wesentlichen paralleles Licht parallel zur optischen Achse der Kamera 20 erzeugt, das also im Wesentlichen senkrecht auf die auf der Auflagefläche 2 aufliegende Seite trifft und dann parallel zu dem einfallenden Licht zur Kamera 20 zurückgeworfen wird.

Gemäß der vorliegenden Erfindung ist vorgesehen, dass die Beleuchtungseinrichtung für sichtbares Licht nicht nur paralleles 'Licht, das im Wesentlichen senkrecht auf die zu untersuchende Seite des Dokuments auftrifft, erzeugen kann, sondern dass die Beleuchtung mit parallelem sichtbaren Licht aufeinanderfolgend unter verschiedenen Beleuchtungswinkeln der untersuchten Dokumentseite erfolgt. Dazu sind im vorliegenden Auführungsbeispiel eine Mehrzahl von Lichtquellen 12, 14, 16, 18 vorgesehen, die außerhalb der optischen Achse der Kamera 20 angeordnet sind.

Jede Lichtquelle ist mit einem Parabolspiegel versehen, der so angeordnet und ausgerichtet ist, um jeweils im Wesentlichen parallele Strahlung von der zugehörigen Lichtquelle unter einem bestimmten Beleuchtungswinkel auf die Auflagefläche 2 zu werfen.

Die nicht dargestellte Steuer- und Auswerteeinheit ist so vorbereitet, dass aufeinanderfolgend die Beleuchtungseinrichtungen 4, 6, 8, 10, 12, 14, 16 und 18 aktiviert werden und die jeweils von der Kamera 20 aufgenommenen Bilder gespeichert und ausgewertet werden.

Die Auswertung der Bilder unter UV- und Infrarotbeleuchtung erfolgt mit Mitteln der digitalen Bildverarbeitung in bekannter Weise, so dass darauf hier nicht weiter eingegangen wird.

Bei der Beleuchtung mit sichtbarem Licht aktiviert die Steuerund Auswerteeinrichtung selektiv die Lichtquellen 10, 12, 14, 16 und 18, um so eine Mehrzahl von Bildern der Seite des Reisepasses unter vershiedenen Beleuchtungswinkeln aufzunehmen, die von der Steuer- und Ausleseeinheit ausgewertet werden können.

Bei der Überprüfung von standartisierten Dokumenttypen wie etwa Reisepässen oder Geldscheinen wird die Steuer- und Auswerteeinrichtung mit einem umfangreichen Datenbestand versehen sein, die die Kennzeichen, Sicherheitsmerkmale und weitere Eigenschaften von sämtlichen bekannten Dokumenttypen umfassen (z.B. Eigenschaften, Kennzeichen und Sicherheitsmerkmale der Reisepässe verschiedener Länder, Eigenschaften und Sicherheitsmerkmale von Geldscheinen mit den unterschiedlichen Nennwerten).

Eine solche Datenbank kann auch jeweils Informationen darüber enthalten, wo besondere Sicherheitskennzeichen vorhanden sind, die bei visueller Betrachtung unter verschiedenen Betrachtungswinkeln variierende Erscheingungsbilder ergeben, wie z.B. Hologramme, Kinegramme und Aufdrucke mit optisch variabler Tinte. Soweit die Steuer- und Auswerteeinheit den Dokumenttyp erkannt hat, werden die Bilder bei Beleuchtung mit sichtbarem, parallelem Licht unter verschiedenen Beleuchtungswinkeln im Bereich der Kennzeichen verglichen und festgestellt, ob sich die erwartete Variation bei Änderung des Beleuchtungswinkels im Bereich der Sicherheitskennzeichen feststellen lässt.

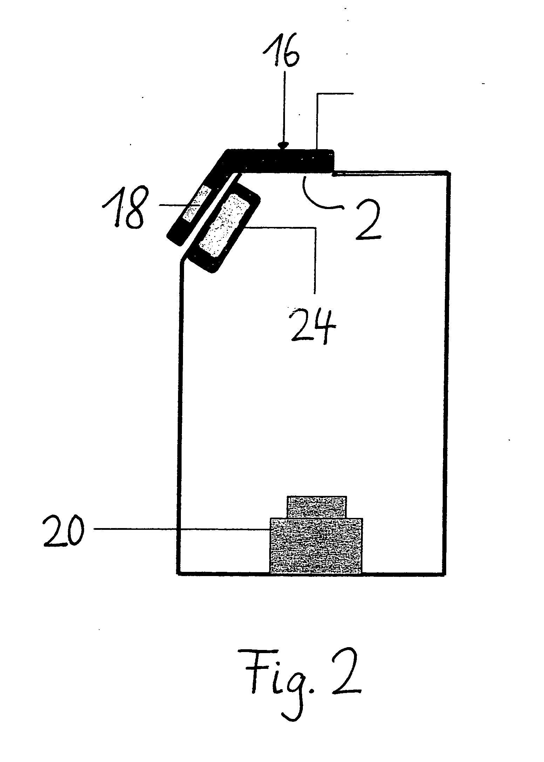

Figur 2 zeigt eine schematische Seitenansicht des Lesegerätes. Auf die Auflagefläche 2 ist ein Reisepass 16 so aufgelegt, dass die Seite mit dem Photo auf der Auflagefläche 2 aufliegt und so von der Kamera und der Steuerung der Steuer- und Auswerteeinheit bei verschiedenen Beleuchtungen und Beleuchtungswinkeln aufgenommen werden kann. Das Lesegerät ist angrenzend an die Auflagefläche 2 mit einer weiteren Auflagefläche versehen, die von der Auflagefläche 2 abgewinkelt ist und so angeordnet ist, dass der restliche Teil des aufgeklappten Reisepasses 16 auf der weiteren Auflagefläche liegt. In die weitere Auflagefläche ist eine Ausleseeinrichtung integriert, die einen mit einem Transponder versehenen Chip kontaktlos auslesen kann. Diese Ausführungsform ist besonders bevorzugt für Reisepässe, in die bereits kontaktlos auslesbare Chips integriert sind, in denen biometrische Daten und anderweitige Daten des Passinhabers eingespeichert sind. Diese Daten können dann von der Steuer- und Auswerteeinheit bei weiteren Prüfungen der Echtheit des Dokuments oder bei der weiteren Identitätsüberprüfung des Reisepassinhabers verwendet werden. Z.B. kann vorgesehen sein, dass der Reisepassinhaber auch einen Fingerabdruck auf einem Fingerabdruck-Sensor eingeben muss, der dann mit dem in dem Chip im Reisepass gespeicherten verglichen werden kann.

## Patentansprüche

1. Lesegerät zur atomatischen Prüfung der Echtheit von Dokumenten, wobei das Lesegerät aufweist:
Eine Mehrzahl von Beleuchtungseinrichtungen (10, 4, 6) zum im Wesentlichen ganzflächigen Beleuchten einer auf einer Dokumentenauflagefläche (2) aufliegenden Seite des Dokuments aufeinanderfolgend mit sichtbarem Licht, ultraviolettem Licht und Infrarotstrahlung,
eine Kamera (20) zur jeweiligen Aufnahme der beleuchteten Seite und
einer Steuer- und Auswerteeinrichtung zur Steuerung der Beleuchtungseinrichtungen und zur Auswertung der unter den verschiedenen Beleuchtungen von der Kamera augenommenen Bilder,
**dadurch gekennzeichnet, dass** die Beleuchtungseinrichtung (10, 12, 14, 16, 18) für sichtbares Licht so ausgestaltet ist, dass die Seite des Dokuments mit im Wesentlichen paralleler Strahlung aufeinanderfolgend unter wenigstens zwei Einfallswinkeln zur Seitenoberfläche des Dokuments beleuchtbar ist, und dass die Steuer- und Auswerteeinrichtung so vorbereitet ist, die unter den wenigstens zwei Einfallswinkeln erzeugten Bilder auf vorgegebene Kriterien hin zu vergleichen, um dadurch Sicherheitskennzeichen, die unter unterschiedlichen Beleuchtungs- oder Betrachtungswinkeln unterschiedliche Erscheinungbilder bieten, erkennen zu können.

2. Lesegerät nach Anspruch 1, **dadurch gekennzeichnet, dass** die Beleuchtungseinrichtung für sichtbares Licht eine erste Lichtquelle (12) zum Richten im Wesentlichen paralleler Strahlung unter einem ersten Einfallswinkel und eine zweite Lichtquelle (14) zum Richten im Wesentlichen paralleler Strahlung unter einem zweiten Einfallswinkel zur Seitenoberfläche des Dokuments aufweist.

3. Lesegerät nach Anspruch 2, **dadurch gekennzeichnet, dass** die erste und zweite Lichtquelle jeweils mit einem Parabolspiegel versehen sind, die von der ersten bzw. zweiten Lichtquelle beleuchtbar und so angeordnet sind, um im Wesentlichen parallele Strahlung unter einem ersten bzw. zweiten Einfallswinkel zur Seitenoberfläche zu richten.

4. Lesegerät nach einem der vorhergehenden Ansprüche, **dadurch gekennzeichnet, dass** das Lesegerät angrenzend an die Dokumentenauflagefläche (2) mit einer weiteren Auflagefläche (3) versehen ist, in die eine Ausleseeinrichtung (24) zur kontaktlosen Auslese eines Transponders eingebaut ist, die mit der Steuer- und Auswerteeinheit verbunden ist.
